# EUROPÄISCHE PATENTANMELDUNG

(11) **EP 1 531 396 A1**
(43) Veröffentlichungstag der Anmeldung: **18.05.2005**
(21) Anmeldenummer: 03026118.4
(22) Anmeldetag: 13.11.2003
(51) Int. Cl.: G06F 12/02

(54) **Heap-Speicher mit Selbstverwaltungs-Funktionalität sowie zu-gehöriges objektorientiertes Datenverarbeitungssystem**

(71) Anmelder: SIEMENS AKTIENGESELLSCHAFT, 80333 München (DE)
(72) Erfinder: Lagally, Michael, 81243 München (DE); Pätzold, Jens, 81827 München (DE); Schlichte, Marc, 81379 München (DE)

(57) **Zusammenfassung**

Die Erfindung betrifft einen Heap-Speicher (HS) mit Selbstverwaltungs-Funktionalität sowie ein zugehöriges objektorientiertes Datenverarbeitungssystem, wobei eine Heap-Speichereinheit (1) Daten in typisierten Objekten abspeichert, ein externer Adress-/Datenbus (Aₑ/Dₑ) die Heap-Speichereinheit (1) mit einer externen Datenverarbeitungseinheit (DV) zum Abarbeiten eines objektbezogenen Anwendungsprogramms (OA) verbindet und ein interner Adress-/Datenbus (Aᵢ/Dᵢ) die Heap-Speichereinheit (1) mit einer speicherinternen Speicherbereinigungseinheit (2) verbindet. Eine Synchronisationseinheit (3) führt hierbei eine objektbezogene Synchronisation zwischen dem internen und dem externen Adress/Datenbus durch, wobei die speicherinterne Speicherbereinigungseinheit (2) in Zusammenarbeit mit der Synchronisationseinheit (3) eine Speicherbereinigung in der Heap-Speichereinheit (1) durchführt. Auf diese Weise kann eine wesentliche Leistungssteigerung ermöglicht werden.

## Beschreibung

Die vorliegende Erfindung bezieht sich auf einen Heap-Speicher mit Selbstverwaltungs-Funktionalität sowie ein zugehöriges objektorientiertes Datenverarbeitungssystem und insbesondere auf einen Heap-Arbeitsspeicher mit integrierter aktiver dynamischer Freispeicherverwaltung.

Objektbasierte Systeme bzw. Systeme, in denen eine objektorientierte Programmierung bzw. objektbezogene Programmiersprachen Anwendung finden, werden zunehmend wichtiger, da insbesondere neue und einfachere Lösungsansätze für zukünftige oder bestehende Probleme realisiert werden können.

Während in herkömmlichen Datenverarbeitungssystemen ein von einer Datenverarbeitungseinheit wie z.B. einem Prozessor abzuarbeitendes Programm üblicherweise sequentiell in einem Arbeitsspeicher gespeichert ist und lediglich variable Parameter in vorbestimmten Speicherbereichen verändert werden, realisieren objektbasierte bzw. objektbezogene Datenverarbeitungssysteme ihre Speicherverwaltung grundsätzlich anders, wobei in einem sogenannten Heap-Speicher bzw. Haldenspeicher üblicherweise Daten in typisierten Objekten abgelegt werden, und somit neuartige Lösungsansätze ermöglichen. Bekannte objektorientierte Programmiersprachen sind beispielsweise C++, C# oder JAVA®.

In einem derartigen objektorientierten Datenverarbeitungssystem bezeichnet ein Block bzw. Block einen Speicherbereich, der im Heap-Speicher zugewiesen wird. Ein Objekt bzw. object befindet sich in einem Block und enthält üblicherweise eine Typ-Identifikation bzw. Type-Tag zur Festlegung eines vorbestimmten Objekt-Typs sowie Datenzellen zum Speichern von eigentlichen Nutzdaten und insbesondere Zeiger bzw. Referenzen, die beispielsweise auf andere Objekte verweisen. Ein Zeiger ist demzufolge ein Wert, der als eine Adresse bzw. Referenz zu einem Block und insbesondere zu einem Objekt verwendet wird.

Anhand der Zeiger bzw. einer vorhandenen Referenzierung kann in objektorientierten Datenverarbeitungssystemen üblicherweise festgestellt werden, welche Block bzw. welche Objekte aktiv sind bzw. benutzt werden und welche Block bzw. Objekte deaktiviert wurden und somit unbenutzt für eine Freigabe von Speicherplatz im Heap-Speicher zur Verfügung stehen.

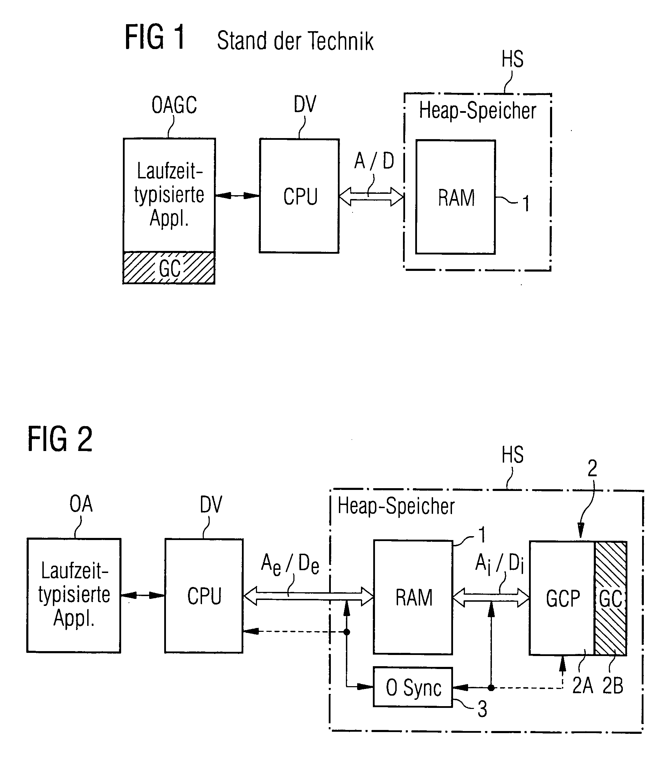

Figur 1 zeigt eine vereinfachte Blockdarstellung zur Veranschaulichung eines objektbezogenen Datenverarbeitungssystems, wie es herkömmlicherweise verwendet wird.

Eine Datenverarbeitungseinheit DV, wie sie üblicherweise als Zentraleinheit und insbesondere als Mikroprozessoreinheit in einer Vielzahl von Datenverarbeitungssystemen vorliegt, dient im Wesentlichen der Abarbeitung eines objektbezogenen Programms bzw. einer objektorientierten Applikation OAGC, welche üblicherweise ein Speicherbereinigungsprogramm GC (Garbage Collector) aufweist. Derartige objektorientierte Programmiersprachen sind beispielsweise C# und JAVA®, wobei eine sogenannte virtuelle Maschine (Virtual Machine) zusätzlich zwischen die Hardwareplattform der Datenverarbeitungseinheit DV und die eigentliche Applikation bzw. das Anwendungsprogramm geschaltet wird, um eine maximale Unabhängigkeit von einer jeweiligen Hardwareplattform zu ermöglichen.

Ein Heap-Speicher bzw. Haldenspeicher HS dient nunmehr als Arbeitsspeicher für ein derartiges objektorientiertes Datenverarbeitungssystem bzw. ein objektbezogenes Applikationsprogramm OAGC, wobei Daten in typisierten Objekten innerhalb eines Blocks in einer Heap-Speichereinheit 1 gespeichert werden. Die Heap-Speichereinheit 1 ist ein Schreib-Lese-Speicher (RAM, Random Access Memory), der über einen Adress-/Datenbus A/D sowie eine nicht dargestellte Steuerleitung mit der Datenverarbeitungseinheit DV bzw. einer CPU (Central Processing Unit) in Verbindung steht.

Bei der Durchführung bzw. Abarbeitung des objektbezogenen Anwendungsprogramms OAGC mit seinem integrierten Speicherbereinigungsprogramm GC werden innerhalb des Heap-Speichers HS bzw. der Heap-Speichereinheit 1 eine Vielzahl von Block mit zugehörigen Objekten erzeugt und wieder gelöscht, wobei ein Löschen im Wesentlichen das Entfernen einer Referenz bzw. eines Zeigers darstellt und die Objekte bzw. eigentlichen Daten in den typisierten Objekten weiterhin in den Block bzw. den jeweiligen Speicherbereichen vorhanden sind und somit zunehmend Speicherplatz verbrauchen.

Zur Speicherbereinigung besitzen daher derartige objektbezogene Applikationen sogenannte Freispeicherverwaltungsprogramme bzw. Garbage Collector GC, die eine automatische Speicherbereinigung des Heap-Speichers HS durchführen, sobald kein weiterer freier Speicherplatz zum Abspeichern von zusätzlichen Block bzw. Objekten im Heap-Speicher zur Verfügung steht. Nachteilig ist hierbei jedoch, dass die von der Datenverarbeitungseinheit DV durchgeführte Freispeicherverwaltung zusätzliche Rechenzeit kostet und somit eine Gesamt-Performance verringert. Darüber hinaus wird der Adress/Datenbus A/D stark belastet, wodurch sich ebenfalls eine Leistungsfähigkeit des Datenverarbeitungssystems verschlechtert.

Der Erfindung liegt daher die Aufgabe zu Grunde, einen Heap-Speicher sowie ein zugehöriges objektorientiertes Datenverarbeitungssystem zu schaffen, wobei die Leistungsfähigkeit des Gesamtsystems wesentlich verbessert wird.

Erfindungsgemäß wird diese Aufgabe hinsichtlich des Heap-Speichers durch die Merkmale des Patentanspruchs 1 und hinsichtlich des objektorientierten Datenverarbeitungssystems durch die Merkmale des Patentanspruchs 9 gelöst.

Insbesondere durch die Verwendung einer Heap-Speichereinheit zum Speichern von Daten in typisierten Objekten, einem externen Adress-/Datenbus zum Verbinden der Heap-Speichereinheit mit einer externen Datenverarbeitungseinheit, die ein objektbezogenes Anwendungsprogramm abarbeitet, einem internen Adress-/Datenbus zum Verbinden der Heap-Speichereinheit mit einer speicherinternen Speicherbereinigungseinheit und einer Synchronisationseinheit zum objektbezogenen Synchronisieren des internen Adress-/Datenbusses mit dem externen Adress/Datenbus, wobei die speicherinterne Speicherbereinigungseinheit in Abhängigkeit von der Synchronisationseinheit eine Speicherbereinigung in der Heap-Speichereinheit durchführt, kann die Performance bzw. Leistungsfähigkeit eines objektorientierten Gesamt-Datenverarbeitungssystems wesentlich gesteigert werden, da sowohl der Adress-/Datenbus als auch die Datenverarbeitungseinheit wesentlich entlastet werden. Darüber hinaus ergibt sich dadurch eine vereinfachte Handhabbarkeit und ein vereinfachtes Schaltungsdesign.

Vorzugsweise weist die speicherinterne Speicherbereinigungseinheit einen Mikroprozessor auf, der als Mikroprogramm eine Speicherbereinigungs-Routine aufweist. Auf diese Weise kann unter Verwendung von im Wesentlichen standardisierten Elementen bzw. Programmteilen ein neuartiger Heap-Speicherbaustein besonders kostengünstig realisiert werden.

Ferner steuert die Synchronisationseinheit die speicherinterne Speicherbereinigungseinheit derart, dass eine Speicherbereinigung nur dann durchgeführt wird, wenn die Heap-Speichereinheit voll ist bzw. keine weiteren Daten in typisierten Objekten abgespeichert werden können. Dadurch kann ein Stromverbrauch des Heap-Speichers wesentlich verringert werden.

Ferner kann die Synchronisationseinheit die speicherinterne Speicherbereinigungseinheit auch derart steuern, dass eine Speicherbereinigung in regelmäßigen Zeitabständen durchgeführt wird, wodurch zu jedem Zeitpunkt ein Heap-Speicher mit maximaler Speicherkapazität zur Verfügung steht und Zeitverzögerungen bei der Durchführung des objektbezogenen Anwendungsprogramms auf Grund einer Freispeicherverwaltung minimiert werden.

Vorzugsweise weist die Heap-Speichereinheit einen Schreib-Lese-Speicher mit zwei Anschlussports bzw. einen sogenannten "Dual Ported RAM" (Random Access Memory) auf, der wiederum als Standardelement zur Verfügung steht und somit eine äußerst kostengünstige Realisierung des Heap-Speichers ermöglicht. , '

In der speicherinternen Speicherbereinigungseinheit wird ein gängiger Garbage-Collection Algorithmus, beispielsweise ein Referenzzähler-, ein Kompakt-, ein Kopier-, ein Mark-and-Sweep- oder ein Generationen-Algorithmus zur Speicherbereinigung durchgeführt. Da derartige Speicherbereinigungsprozeduren ebenfalls allgemein bekannte Speicherbereinigungsprozeduren darstellen, können auf jeweilige Randbedingungen optimal abgestimmte Heap-Speicher bzw. Heap-Speicherbausteine äußerst kostengünstig realisiert werden. Insbesondere für mobile Endgeräte mit ihren begrenzten Ressourcen ergeben sich dadurch besondere Vorteile.

Hinsichtlich des objektorientierten Datenverarbeitungssystems wird im Wesentlichen ein Heap-Speicher mit den vorstehend beschriebenen Merkmalen sowie eine externe Datenverarbeitungseinheit verwendet, wodurch man auf sehr einfache und kostengünstige Weise ein leistungsfähiges Datenverarbeitungssystem zur Verarbeitung von objektorientierten Anwendungsprogrammen erhält.

In den weiteren Unteransprüchen sind weitere vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:
Figur 1 eine vereinfachte Blockdarstellung eines herkömmlichen objektorientierten Datenverarbeitungssystems; und
Figur 2 eine vereinfachte Blockdarstellung eines erfindungsgemäßen objektorientierten Datenverarbeitungssystems mit erfindungsgemäßen Heap-Speicher.
Figur 2 zeigt eine vereinfachte Blockdarstellung eines objektorientierten Datenverarbeitungssystems mit einem erfindungsgemäßen Heap-Speicher, wobei gleiche Bezugszeichen gleiche Elemente wie in Figur 1 bezeichnen und auf eine wiederholte Beschreibung nachfolgend verzichtet wird.

Gemäß Figur 2 besteht das objektorientierte Datenverarbeitungssystem aus einem neuartigen Heap-Speicher bzw. Heap-Speicherbaustein HS, der über einen externen Adress-/Datenbus Aₑ/Dₑ mit zumindest einer externen Datenverarbeitungseinheit DV verbunden ist, welche ein objektorientiertes Anwendungsprogramm OA abarbeitet.

Waren bisher die objektbezogenen Anwendungsprogramme OA mit einem Zusatzprogramm GC zur Freispeicherverwaltung versehen, so können nun erstmalig auch objektorientierte Anwendungsprogramme OA ohne derartige Freispeicherverwaltungsprogramme verwendet werden, da diese Funktionalität nunmehr unmittelbar im Heap-Speicher HS realisiert bzw. implementiert ist.

Demzufolge besteht der erfindungsgemäße Heap-Speicher aus einer Heap-Speichereinheit 1 zum Speichern von Daten in typisierten Objekten bzw. sogenannten Block, wobei als Heap-Speicher 1 vorzugsweise ein Schreib-Lese-Speicher mit zwei Anschlussports bzw. ein sogenannter "Dual Ported RAM" (Random Access Memory) verwendet wird. Derartige Schreib-Lese-Speicher sind allgemein bekannt und besitzen darüber hinaus eine Basis-Synchronisations-Funktionalität zum Synchronisieren der beiden Anschlussports, wodurch bereits ein geordnetes Schreiben und Lesen von Daten in der Heap-Speichereinheit 1 auf unterster Ebene, d.h. Adressebene, realisiert ist.

Zur Realisierung einer weitergehenden objektorientierten bzw. objektbezogenen Synchronisation zwischen dem zu der externen Datenverarbeitungseinheit DV führenden externen Adress-/Datenbus Aₑ/Dₑ und einem internen Adress-/Datenbus Aᵢ/Dᵢ weist der Heap-Speicher HS ferner eine Synchronisationseinheit 3 auf, die im Wesentlichen auch für objektorientierte Programmiersprachen bzw. objektbezogene Anwendungsprogramme eine geeignete Synchronisation ermöglicht, um ein geordnetes Lesen und Schreiben von Daten in typisierten Objekten bzw. Speicherbereichen innerhalb der Heap-Speichereinheit zu ermöglichen.

Der externe Adress-/Datenbus Aₑ/Dₑ verbindet demzufolge die Heap-Speichereinheit 1 mit der externen Datenverarbeitungseinheit DV, die ein objektbezogenes Anwendungsprogramm OA abarbeitet, welches vorzugsweise keine Freispeicherverwaltung aufweist oder deren Freispeicherverwaltung deaktiviert wird. Auf diese Weise können objektbezogene Anwendungsprogramme, wie beispielsweise ein JAVA-Anwendungsprogramm, optimal abgearbeitet werden, wobei der Heap-Speicher HS und insbesondere die Heap-Speichereinheit 1 als Arbeitsspeicher verwendet wird und jeweilige Speicherbereiche bzw. Block für typisierte Objekte zur Verfügung stellt.

Da sich, wie vorstehend bereits beschrieben wurde, bei der Durchführung eines derartigen objektorientierten Anwendungsprogramms eine Vielzahl von inaktiven bzw. nicht benutzten typisierten Objekten bzw. Block in der Heap-Speichereinheit 1 ansammeln (beispielsweise durch Rücksetzen ihrer Zeiger bzw. Referenzen auf 0), stellt sich irgendwann die Situation ein, dass der Heap-Speicher HS bzw. die Heap-Speichereinheit 1 voll ist, d.h. keine weiteren Daten in typisierten Objekten abgespeichert werden können, obwohl eigentlich noch ausreichend Speicherplatz vorhanden wäre.

Der gemäß dem Stand der Technik in der objektorientierten Applikation OAGC integrierte Speicherbereinigungsprozess GC wird zur Entlastung des externen Adress-/Datenbusses Aₑ/Dₑ und zur Entlastung der externen Datenverarbeitungseinheit DV nunmehr vom Heap-Speicher HS selbstständig durchgeführt, wobei an den internen Adress-/Datenbus Aᵢ/Dᵢ eine speicherinterne Speicherbereinigungseinheit 2 angeschaltet ist, die in Abhängigkeit von der Synchronisationseinheit 3 eine Speicherbereinigung in der Heap-Speichereinheit 1 durchführt.

Genauer gesagt werden hierbei unbenutzte bzw. in einem Objektgeflecht bzw. Objektbaum nicht referenzierte Block bzw. typisierte Objekte zunächst erkannt und anschließend freigegeben, um abschließend eine Neuordnung (Defragmentierung) der verbleibenden benutzten bzw. aktiven Block bzw. typisierten Objekte durchzuführen. Auf diese Weise kann ein im Heap-Speicher HS nicht genutzter Speicherplatz zur weiteren Verwendung reorganisiert werden.

Die speicherinterne Speicherbereinigungseinheit 2 weist vorzugsweise einen herkömmlichen Mikroprozessor als Speicherbereinigungsprozessor 2A (GCP, Garbage Collection Processor) auf, der zur Realisierung seiner Speicherbereinigungs-Funktionalität mit einem Speicherbereinigungs-Mikroprogramm 2B betrieben wird. Demzufolge besitzt die Speicherbereinigungseinheit 2 lediglich die Aufgabe, in Abhängigkeit von der Synchronisationseinheit 3 bzw. dem von der externen Datenverarbeitungseinheit ausgeführten objektbezogenen Anwendungsprogramm OA eine Speicherbereinigung des Heap-Speichers bzw. der Heap-Speichereinheit 1 durchzuführen.

Die Synchronisationseinheit 3 kann beispielsweise die speicherinterne Speicherbereinigungseinheit 2 derart ansteuern, dass eine Speicherbereinigung nur dann durchgeführt wird, wenn die Heap-Speichereinheit 1 voll ist, bzw. die externe Datenverarbeitungseinheit beim Ausführen des objektbezogenen Anwendungsprogramms keine weiteren Daten mehr in typisierten Objekten über die externen Adress-/Daten-Schnittstelle in den Heap-Speicher einschreiben kann. Bei einer derartigen Auslösung bzw. Triggerung der Freispeicherverwaltung kann der Stromverbrauch bzw. Energieverbrauch besonders verringert werden, was insbesondere für mobile Endgeräte (wie z.B. Handys, PDAs) einen wesentlichen Vorteil darstellt.

Darüber hinaus kann die Synchronisationseinheit 3 die speicherinterne Speicherbereinigungseinheit 2 auch derart steuern, dass eine Speicherbereinigung in vorbestimmten Zeitabständen und insbesondere in regelmäßigen Zeitabständen durchgeführt wird. In einem derartigen Betriebsmodus führt der Heap-Speicher HS demzufolge selbstständig in regelmäßigen Zeitabständen eine Speicherbereinigung durch, wodurch das Auftreten von Zuständen, wonach ein Heap-Speicher voll ist, grundsätzlich ausgeschlossen werden kann, es sei denn, die tatsächliche Kapazität des Heap-Speichers wird erreicht. Auf diese Weise erhält man eine wesentliche Leistungssteigerung und insbesondere Verringerung der freispeicherverwaltungsbedingten Verzögerungszeiten bei der Abarbeitung von objektbezogenen Anwendungsprogrammen.

Bei der objektbezogenen Synchronisation zwischen dem externen und dem internen Adress-/Datenbus kann wiederum auf bereits vorhandene Synchronisations-Algorithmen zurückgegriffen werden, wobei z.B. ein inkrementeller Synchronisations-Algorithmus durchgeführt wird, bei dem die Freispeicherbereinigung durch die Speicherbereinigungseinheit 2 mit der Anwendungsprogrammausführung durch die externe Datenverarbeitungseinheit DV schrittweise verzahnt wird.

Ferner kann auch ein sogenannter nebenläufiger Synchronisations-Algorithmus durchgeführt werden, wobei die Speicherbereinigung nebenläufig zu der objektorientierten Applikation OA abläuft.

In gleicher Weise kann auch die speicherinterne Speicherbereinigungseinheit 2 auf vorbekannte Speicherbereinigungsprozeduren bzw. -algorithmen zurückgreifen.

Im Wesentlichen sei hierbei auf den sogenannten Referenzzähler-Algorithmus verwiesen, bei dem für jedes Objekt ein Referenzzähler gepflegt und beim Erstellen des Objekts auf Eins gesetzt wird. Wird ein neues Objekt mit einer Referenz auf dieses Objekt erstellt, so wird der Zähler um Eins erhöht, während beim Löschen einer Referenz auf dieses Objekt der Zähler um Eins erniedrigt wird. Objekte, deren Referenzzähler demzufolge den Wert Null aufweisen, können somit gelöscht bzw. als "Freigegeben" markiert werden. Ein wesentlicher Vorteil dieses Speicherbereinigungsverfahrens ist, dass in relativ kleinen Zeitstücken eine Speicherbereinigung durchgeführt werden kann, wobei jedoch nachteilig ist, dass der Algorithmus keine sogenannten "Zyklen" erkennt, weshalb nicht immer alle nichtbenutzten Objekte gelöscht bzw. freigegeben werden können. Ferner ist der Aufwand zur Verwaltung des Referenzzählers nicht unwesentlich.

Darüber hinaus können sogenannte "Mark-and-Sweep-Algorithmen" zum Einsatz kommen, wobei ausgehend von den Wurzeln eines Objektgeflechts (Root) Referenzen systematisch durchgegangen werden und alle Objekte, die darüber erreicht werden können, markiert werden. Die Objekte, die nach dem Durchlauf nicht markiert sind, können gelöscht bzw. freigegeben werden, da sie auch vom Programm nicht mehr anzusprechen sind.

Ferner können zur Speicherbereinigung sogenannte Kompakt-Algorithmen (Compacting Collectors) eingesetzt werden, wobei die Objekte zum einen Ende des Heap-Speichers verschoben werden. Hierbei bildet sich ein zusammenhängender freier Speicherbereich am anderen Ende des Heap-Speichers, wobei jedoch alle Referenzen auf die bewegten Objekte anschließend erneuert bzw. neu referenziert werden müssen. Das Erneuern der Referenzen kann dadurch vereinfacht werden, dass die einzelnen Referenzen nicht direkt auf das Objekt verweisen, sondern auf einen sogenannten "Objekt-Handle" in einer Objekttabelle, über den das Objekt referenziert wird. Dadurch müssen nicht mehr die einzelnen Referenzen auf ein Objekt verändert werden, sondern nur die Adresse, auf die das Handle verweist.

Abschließend sei noch auf den sogenannten Kopier-Algorithmus (Copy Collector) hingewiesen, der einen Heap-Speicher in zwei Teilbereiche aufteilt, wobei nur einer dieser Teilbereiche auf einmal benutzt wird. In diesem Teilbereich werden die Objekte ganz normal erzeugt. Wenn der Speicherplatz in diesem Heap-Teilbereich nicht mehr ausreicht, wird die Ausführung des objektorientierten Anwendungsprogramms unterbrochen, wobei die Speicherbereinigungseinheit alle noch lebenden, d.h. noch benutzten Objekte in den zweiten Teil kopiert und dieser Teilbereich des Heap-Speichers zum aktiven Teilbereich wird. Der ursprünglich benutzte Teilbereich des Heap-Speichers wird dann als frei markiert, wodurch alle toten bzw. nicht benutzten Objekte dadurch verloren gehen. Vorteilhaft ist hierbei, dass es keine zwei Phasen wie bei der Mark-and-Sweep-Methode gibt und die Objekte sozusagen "on the fly" während des Durchschreitens des Referenzgraphen bzw. des Objektgeflechts kopiert werden. Nachteilig ist jedoch der erhöhte Speicherplatzbedarf, da der Heap-Speicher doppelt so groß sein muss wie eigentlich notwendig.

Selbstverständlich können auch beliebige Kombinationen der vorstehend genannten Speicherbereinigungs-Algorithmen durchgeführt werden, um für bestimmte Anforderungen einen optimierten Heap-Speicher zu schaffen.

Insbesondere ist es auf diese Weise möglich, für beispielsweise mobile objektorientierte Datenverarbeitungssysteme und insbesondere für mobile Telekommunikationsendgeräte spezialisierte Heap-Speicher bzw. Heap-Speicherbausteine HS zu schaffen, die eine wesentliche Leistungssteigerung des gesamten Systems ermöglichen.

In diesem Sinne wird der Heap-Speicher vorzugsweise als integrierte Schaltung auf einem einzigen Halbleiterbaustein realisiert, wodurch sich insbesondere ein Schaltungsdesign und eine Verwendbarkeit wesentlich verbessern.

Die Erfindung wurde vorstehend anhand eines Heap-Speichers beschrieben, wobei die Speicherbereinigungseinheit durch einen Mikroprogramm-gesteuerten Mikroprozessor realisiert ist. In gleicher Weise kann das Speicherbereinigungsprogramm jedoch auch in einer Mikrocode-Ebene, einer Betriebssystemebene oder einer Anwendungsprogrammebene einer Speicherbereinigungseinheit realisiert sein, wobei der Speicherbereinigungsprozessor eine jeweilige Hardwareplattform mit oder ohne Mikrocodeunterstützung, Mikroprogramm-Unterstützung und Betriebssystemunterstützung aufweist.

Ferner können anstelle des genannten Mikroprozessors (CPU) auch andere Datenverarbeitungseinheiten und insbesondere digitale Signalprozessoren (DSP) oder FPGAs (Field Programmable Gate Array) verwendet werden.

Ferner wurde die Erfindung anhand eines "Dual Ported RAM" als Heap-Speichereinheit beschrieben. Sie ist jedoch nicht darauf beschränkt und umfasst in gleicher Weise alle weiteren Speichereinheiten, die zum Speichern von Daten in typisierten Objekten geeignet sind und einen internen sowie externen Adress-/Datenbus aufweisen.

Ferner wurde die Erfindung anhand von speziellen Synchronisations- und Speicherbereinigungs-Algorithmen beschrieben. Sie ist jedoch nicht darauf beschränkt und umfasst auch weitere Synchronisations- und Speicherbereinigungs-Algorithmen.

### Bezugszeichenliste

- 1: Heap-Speichereinheit
- 2: Speicherbereinigungseinheit
- 2A: Speicherbereinigungsprozessor
- 2B: Speicherbereinigungs-Mikroprogramm
- 3: Synchronisationseinheit
- HS: Heap-Speicher
- DV: Datenverarbeitungseinheit
- OA, OAGC: objektbezogenes Anwendungsprogramm
- Ae/De: externer Adress-/Datenbus
- Ai/Di: interner Adress-/Datenbus

## Patentansprüche

1. Heap-Speicher mit Selbstverwaltungs-Funktionalität mit: einer Heap-Speichereinheit (1) zum Speichern von Daten in typisierten Objekten;
einem externen Adress-/Datenbus (Aₑ/Dₑ) zum Verbinden der Heap-Speichereinheit (1) mit einer externen Datenverarbeitungseinheit (DV) zum Abarbeiten eines objektbezogenen Anwendungsprogramms (OA);
einem internen Adress-/Datenbus (Aᵢ/Dᵢ) zum Verbinden der Heap-Speichereinheit (1) mit einer speicherinternen Speicherbereinigungseinheit (2); und
einer Synchronisationseinheit (3) zum objektbezogenen Synchronisieren des internen Adress-/Datenbusses (Aᵢ/Dᵢ) mit dem externen Adress-/Datenbus (Aₑ/Dₑ), wobei die speicherinterne Speicherbereinigungseinheit (2) in Abhängigkeit von der Synchronisationseinheit (3) eine Speicherbereinigung in der Heap-Speichereinheit (1) durchführt.

2. Heap-Speicher nach Patentanspruch 1, **dadurch gekennzeichnet, dass** die speicherinterne Speicherbereinigungseinheit (2) einen Speicherbereinigungsprozessor (2A) zur Realisierung eines Garbage Collection Algorithmus aufweist, vorzugsweise in einem Speicherbereinigungs-Mikroprogramm (2B).

3. Heap-Speicher nach Patentanspruch 1 oder 2, **dadurch gekennzeichnet, dass** die Synchronisationseinheit (3) und die speicherinterne Speicherbereinigungseinheit (2) derart gesteuert werden, dass eine Speicherbereinigung nur dann durchgeführt wird, wenn die Heap-Speichereinheit (1) keine weiteren Daten in typisierten Objekten abspeichern kann.

4. Heap-Speicher nach Patentanspruch 1 oder 2, **dadurch gekennzeichnet, dass** die Synchronisationseinheit (3) und die speicherintern Synchronisationseinheit (2) derart gesteuert wird, dass eine Speicherbereinigung in vorbestimmten Zeitabständen durchgeführt wird.

5. Heap-Speicher nach einem der Patentansprüche 1 bis 4, **dadurch gekennzeichnet, dass** die Heap-Speichereinheit (1) einen Schreib-Lese-Speicher mit zwei Anschlussports aufweist.

6. Heap-Speicher nach einem der Patentansprüche 1 bis 5, **dadurch gekennzeichnet, dass** die speicherinterne Speicherbereinigungseinheit (2) unbenutzte typisierte Objekte erkennt, freigibt und eine Neuordnung der verbleibenden benutzten typisierten Objekte durchführt.

7. Heap-Speicher nach einem der Patentansprüche 1 bis 6, **dadurch gekennzeichnet, dass** die speicherinterne Speicherbereinigungseinheit (2) einen Referenzzähler-, Kompakt-, Kopier-, Mark-and-Sweep-, und/oder einen Generations-Algorithmus zur Speicherbereinigung durchführt.

8. Heap-Speicher nach einem der Patentansprüche 1 bis 7, **dadurch gekennzeichnet, dass** er eine auf einem Halbleiterbaustein integrierte Schaltung darstellt.

9. Objektorientiertes Datenverarbeitungssystem mit einem Heap-Speicher nach einem der Patentansprüche 1 bis 8 und zumindest einer externen Datenverarbeitungseinheit (DV), die ein objektorientiertes Anwendungsprogramm (OA) abarbeitet.

10. Objektorientiertes Datenverarbeitungssystem nach Patentanspruch 9, **dadurch gekennzeichnet, dass** das objektorientierte Anwendungsprogramm (OA) keine Freispeicherverwaltung durchführt.

## Geänderte Patentansprüche

### Geänderte Patentansprüche gemäss Regel 86(2) EPÜ.

**1.** Heap-Speicher mit Selbstverwaltungs-Funktionalität mit:
einer Heap-Speichereinheit (1) zum Speichern von Daten in typisierten Objekten;
einem externen Adress-/Datenbus (Aₑ/Dₑ) zum Verbinden der Heap-Speichereinheit (1) mit einer externen Datenverarbeitungseinheit (DV) zum Abarbeiten eines objektbezogenen Anwendungsprogramms (OA);
einem internen Adress-/Datenbus (Aᵢ/Dᵢ) zum Verbinden der Heap-Speichereinheit (1) mit einer speicherinternen Speicherbereinigungseinheit (2); und
eine Synchronisationseinheit (3) zum objektbezogenen Synchronisieren des internen Adress-/Datenbusses (Aᵢ/Dᵢ) mit dem externen Adress-/Datenbus (Aₑ/Dₑ), wobei die speicherinterne Speicherbereinigungseinheit (2) in Abhängigkeit von der Synchronisationseinheit (3) eine Speicherbereinigung in der Heap-Speichereinheit (1) durchführt, die mit einer Anwendungsprogrammausführung durch die externe Datenverarbeitungseinheit (DV) verzahnt ist,
**dadurch gekennzeichnet, dass** die Heap-Speichereinheit (1) den internen sowie externen Adress-/Datenbus aufweist.
